# EUROPEAN PATENT SPECIFICATION

(11) **EP 0 382 971 B1**
(45) Date of publication and mention of the grant of the patent: **15.09.1993**
(21) Application number: 89311940.4
(22) Date of filing: 17.11.1989
(51) Int. Cl.: F16L 43/00, F16L 47/02, F16L 27/00

(54) **Adjustable pipe bend with electrofusion facility**
Verstellbarer Rohrbogen mit Elektroschweisseinrichtung
Coude de tuyau ajustable avec dispositif à soudage électrique

(30) Priority: 13.02.1989 GB 8903223
(43) Date of publication of application: 22.08.1990
(73) Proprietor: UPONOR BV, 5340 AT Oss (NL)
(72) Inventor: Bokor, Shaun David, Wymeswold Leicestershire LE12 6UL (GB); Dickinson, Alan John, Kirkby-in-Ashfield Nottingham NG17 8NQ (GB)
(74) Representative: Hall, Robert Leonard

(56) References cited:
- EP-A- 0 240 732
- DE-A- 2 306 642
- DE-A- 2 500 297
- DE-A- 2 641 504
- US-A- 2 731 933
- US-A- 4 630 846

## Description

Pipe systems for underground gas and water distribution are assembled and fused in-situ. Changes in direction are common, minor changes can be accommodated by the inherent flexibility of the pipe, major changes are currently catered for by a range of moulded or formed fixed angle bends. The moulded or formed bends are fused into the system to maintain a consistent and fully sealed system.

One form of existing bend involves cutting two pipe ends at the same angle and fusing two such cuts together. This forms an angle that is twice the cut angle of each pipe end (i.e. a mitred joint). Bends fabricated by this angle cut and butt fuse process tend not to have good flow characteristics and they are considered no to have the same 'strength' as the pipe system from which they are formed.

In many situations the moulded fixed angle bends do not provide the appropriate degree of directional change. In this situation several bends must be assembled together or extra strain must be placed on the pipe and jointing to accommodate the change in direction. These factors make it difficult to complete the system without resorting to alternative materials which involve transitions and often non-fused elements.

An adjustable angle bend is described in DE-A-2641504 in which two tubular members bear rotatably against one another via circular abutting flanges extending at an inclination to their axis. The flanges are connected and tightened via a clamp extending around their periphery and are sealed by a sealing ring and an annular attachment which projects beyond the flange surface at an end of one of the tubular members. The arrangement is stated to relieve the fluid pressure on the seal between the flanges and enhance the overall sealing effect.

An adjustable bend that could be set at the required angle and then fused would provide benefits in that it would enable fewer components to be used, it would reduce the strain on other components and it would maintain a consistent and fully fused system.

To maintain the flow properties of the pipe system it is also important that a large loss in pressure head does not occur as the fluid flows through the bend. To avoid a significant loss in pressure the adjustable bend must create a smooth change in direction and provide a consistent bore profile at whatever angle it is set.

An objective of the invention is to form an adjustable bend which may be made, for example, in medium density polyethylene (MPDE) which can be readily set to the required angle during installation, the relatively moveable parts being then fusible to complete a low pressure loss bend of the required angle, which may then form part of a fully fusion sealed pipe system.

In EP-A-O 240732, there is described a method for welding a straight, in-line joint between plastic tubes, in which a welding element with a wire coil for electrical resistance heating is positioned between the abutting tube ends. The welding element comprises an annular disc the external diameter of which is approximately equal to the external diameter of the tubes and the internal diameter of which is approximately equal to the nominal internal diameter of the tubes.

According to the present invention, an adjustable pipe bend is provided comprising two relatively moveable pipe parts adapted to be set by relative rotation at any angle to each other within a predetermined range, each of the pipe parts being provided at the junction of the two parts with a flange adapted to mate with the flange on the other pipe part, characterised in that fusion means are provided adapted to fuse the parts together when they have been set at a required angle and in that each flange has grooves or recesses formed in a face of the flange to receive the fusion means which is in the form of a heating element, the arrangement being such that the heating element is entirely contained and sealed within the flanges when they are brought together.

Preferably the fusion means comprises an electrical heating element which is preferably located in or between mating flanges carried by the two parts.

The heating or fusion element may be in the form of a fusion element consisting of an annular ring of plastics material with a heater wire embedded in or partially embedded in one or both surfaces of the element.

Any other form of electrofusion element may be used e.g. single or double sided ring or plate, disc etc. or the electric fusion heater wire may simply be moulded into one end face of a pipe part.

Alternatively the flanges may have grooves or recesses formed in them to receive the heating element so that it is entirely contained and sealed within the flanges when they are formed together.

Optionally during fusion the flanges may be clamped e.g. with split backing rings which are spring loaded to take up fusion melt movement.

Many other plastics materials may be used in place of MDPE.

In the accompanying drawings:-
Figure 1 is a section through one component of an adjustable pipe bend embodying the present invention;
Figure 2 shows, in section, two of the components illustrated in Fig. 1 joined to form the maximum angle of bend of the system;
Figure 3 illustrates the introduction of an additional component to increase the angular range and avoid skew and offsets;
Figure 4 illustrates the use of a butt fusion element of the type shown in EP-A-0240732 used to fuse two components of a pipe bend embodying the present invention;
Figure 5 illustrates the complete 0° to 45° adjustable bend shown in firm line in one position and in dotted line in an adjusted position; and
Figure 6 illustrates a 0° to 90° adjustable bend, of the bend shown in Fig. 3, but again illustrating two different positions.

The concept is to have flanges set at an angle to the pipe so that when two of these flanges are rotated relative to each other a variation in angle occurs.

To obtain such a bend with the minimum number of parts and a maximum angular potential, i.e. 0 to 90 degrees from straight, the centreline axes of the pipe spigots must meet at the centre of rotation of flanges set at 45 degrees. Unfortunately if the bores of the mating parts are taken straight up to the intersect a large interfacing diameter and a sharp intersection edge are created. These effects lead to a large overall fitting diameter and a high pressure loss.

The alternative is to maintain the bore size through the fitting by creating a curve into the flange and allowing the intersect of the pipe axis to move off the centre line of flange rotation. If a two component 90 degree bend is attempted in this format the offset and skew between the spigots at intermediate angles will be very large, therefore a 45 degree maximum bend has been chosen as the base system.

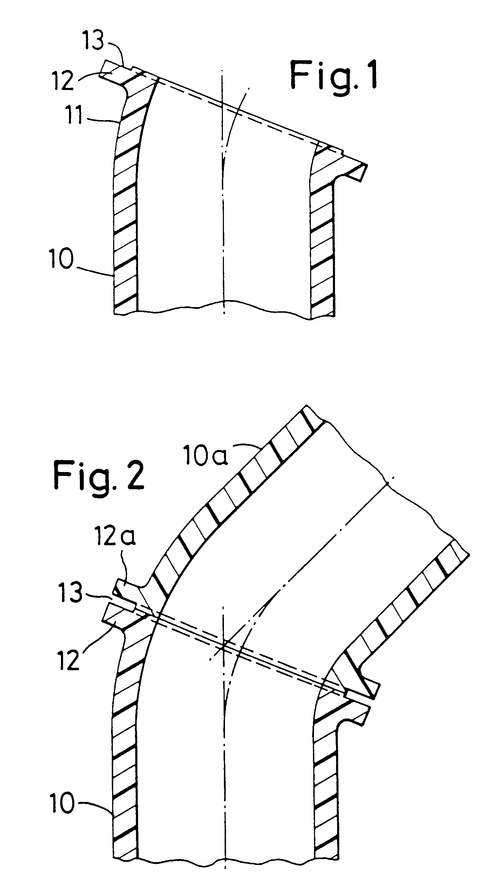

The system will comprise of several PE mouldings, two of these mouldings will normally be identical in any one total bend assembly. The duplicated mouldings take the form of a pipe spigot 10 which is extended around a curve 11 and terminated in a flange 12 which forms an angle to the pipe axis as shown in Figure 1. When two such parts 10, 10a are placed flange to flange with the curve maintained as a continuous arc they form a bend whose included angle from a straight pipe is twice the change of angle of each individual component. Figure 2 shows the combined components. If the components in Figure 2 are rotated relative to each other the angular change is reduced until at 180 degrees relative movement it becomes zero, although an offset in the pipe axis remains. The skew and offset that are developed as the parts rotate relative to each other is not thought to be detrimental to the fittings performance.

The flanges 12, 12a are recessed at 13 to receive a fusion element.

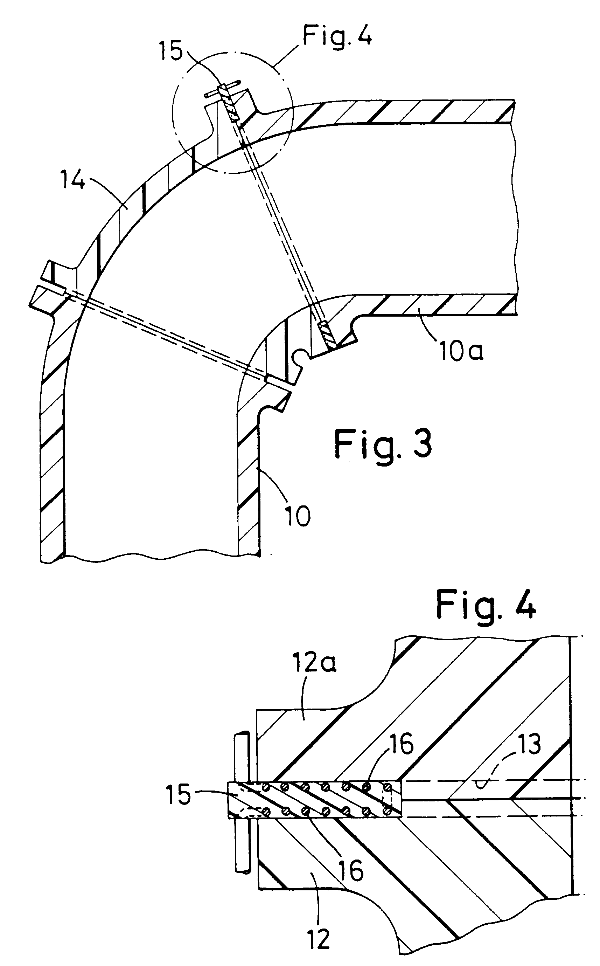

It is possible, by the inclusion of another component 14 (Fig. 3) to maintain the low pressure loss curved bore of the system whilst extending the angular capability of the bend. The configuration in Figure 3 also eliminates any skew and offset provided that only the centre component 14 is rotated relative to the two outercomponents. A disadvantage is the extra complexity, extra components and extra fusion joints.

Where any two of the component parts meet at a flange some location must be provided so that the parts rotate about the correct axis and so that no step occurs in the smooth curve of the bore. A fusion element is also needed to provide a fully sealed system. To provide for both location and fusion a butt fusion ring is used. The location of the ring is shown in Figure 4, the ring will be of a larger size than the fittings nominal size. Details of the ring can be found in EP-A-0240732 , but basically it consists of plastic annular disc 15 with a heater wire 16 located at or adjacent both surfaces of the disc and terminals to which wiring can be attached to supply heater current.

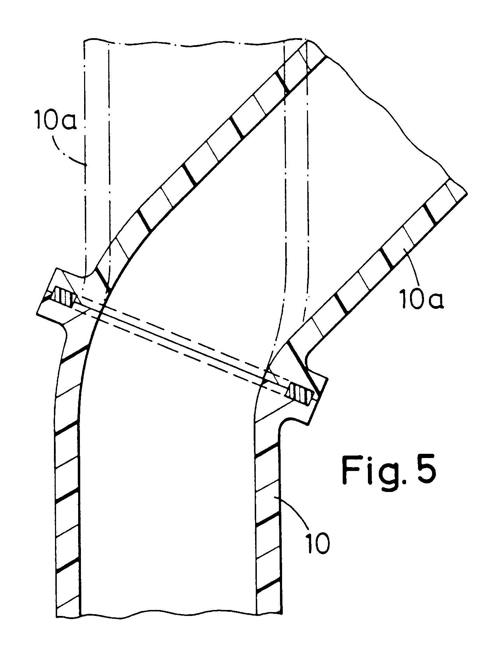

In Figure 5 the 0-45 degree adjustable bend, or radiused elbow, is illustrated with the bend being shown in its extreme positions with adjustment. Portion 10a is rotated relatively to portion 10 from the firm line position shown to a dotted line position thus changing the bend angle through a 45 degree maximum.

It will be noted that in all positions the bend follows the smooth transition from part 10 to part 10a.

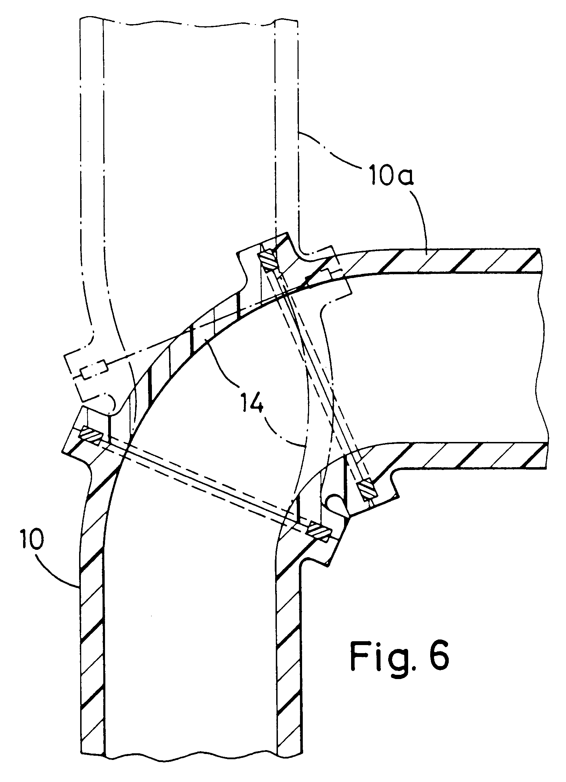

Figure 6 illustrates, in a similar manner, a full 0-90 degree adjustable bend using same parts 10 and 10a but with the additional centreportion 14 which enables the pipe to be adjusted for a full 90 degrees whilst again retaining smooth flow through the pipe joint in all positions. Again the extremes of adjustment shown would be parts 10a and 14 shown in their unadjusted position in firm lines and at extremes of adjustment of the parts in dotted lines.

In use, any of the adjustable bends described above may be set to a required or predetermined angle and then a voltage applied to the heater wire to produce a heating current which melts the plastic material on the surfaces of the ring, plate or disc and also melts the adjacent plastic surfaces on the pipe flanges to cause fusion of the pipe flanges to the ring, plate or disc and consequent formation of a sealed joint.

## Claims

1. An adjustable pipe bend comprising two relatively movable pipe parts (10,10a) adapted to be set by relative rotation at any angle to each other within a predetermined range,each of the pipe parts (10,10a) being provided at the junction of the two parts with a flange (12,12a) adapted to mate with the flange on the other pipe part, characterised in that fusion means (15,16) are provided adapted to fuse the parts together when they have been set at a required angle and in that each flange has grooves or recesses (13) formed in a face of the flange to receive the fusion means which is in the form of a heating element, the arrangement being such that the heating element is entirely contained and sealed within the flanges when they are brought together.

2. A pipe bend according to claim 1, characterised in that the fusion means (15,16) comprises an electrical heating element (16).

3. A pipe bend according to any preceding claim, characterised in that the heating or fusion element consists of an annular disc (15) of plastics material which has a heater wire (16) embedded in or partially embedded in one or both surfaces of the disc.

4. A pipe bend according to claim 1 or claim 2, characterised in that the fusion means comprises a single or double sided ring, or plate, or disc, embodying a heater wire.

5. A pipe bend according to claim 1 or claim 2 characterised in that the fusion means consists of an electric fusion heater wire moulded into one end face of a pipe part.

6. A pipe bend according to any preceding claim, characterised by means being provided to clamp the pipe parts together under spring loading during fusion to take up fusion melt movement.

7. An adjustable pipe bend according to any preceding claim, characterised by having an additional pipe section (14) between the two relatively movable pipe parts so as to provide a full 90° adjustable bend.

8. A pipe bend according to any preceding claim, characterised in that at least one of the pipe parts (10,10a) extends around a curve (11) terminating in a flange (12) which forms an angle to the pipe axis.

## Patentansprüche

1. Verstellbarer Rohrkrümmer, der zwei relativ bewegbare Rohrteile (10, 10a) aufweist, die ausgebildet sind, um durch relatives Drehen unter jedem Winkel zueinander innerhalb eines vorbestimmten Bereichs angeordnet zu werden, wobei jeder Rohrteil (10, 10a) an der Verbindungsstelle der beiden Teile mit einem Flansch (12, 12a) versehen ist, der ausgebildet ist, um mit dem Flansch am anderen Rohrteil zusammengesetzt zu werden, dadurch gekennzeichnet, daß eine Verschmelzungseinrichtung (15, 16) vorgesehen ist, die ausgebildet ist, um die Teile miteinander zu verschmelzen, wenn sie unter einem erforderlichen Winkel angeordnet worden sind, und daß jeder Flansch Nuten oder Ausnehmungen (13) hat, die in einer Endfläche des Flansches gebildet sind, um die Verschmelzungseinrichtung, die in Form eines Heizelements ist, aufzunehmen, wobei die Anordnung derart ist, daß das Heizelement in den Flanschen vollständig enthalten und dicht abgeschlossen wird, wenn diese zusammengebracht werden.

2. Rohrkrümmer nach Anspruch 1, dadurch gekennzeichnet, daß die Verschmelzungseinrichtung (15, 16) ein elektrisches Heizelement (16) aufweist.

3. Rohrkrümmer nach einem der vorhergehenden Ansprüche, dadurch gekennzeichnet, daß das Heiz- oder Verschmelzungselement aus einer ringförmigen Scheibe (15) aus Kunststoff besteht, die einen Heizdraht (16) hat, der in eine oder beide Oberflächen der Scheibe eingebettet oder teilweise eingebettet ist.

4. Rohrkrümmer nach Anspruch 1 oder Anspruch 2, dadurch gekennzeichnet, daß die Verschmelzungseinrichtung einen ein- oder doppelseitigen, einen Heizdraht verkörpernden Ring oder eine solche Platte oder Scheibe aufweist.

5. Rohrkrümmer nach Anspruch 1 oder Anspruch 2, dadurch gekennzeichnet, daß die Verschmelzungseinrichtung aus einem elektrischen Verschmelzungs-Heizdraht besteht, der in eine Endfläche eines Rohrteils eingeformt ist.

6. Rohrkrümmer nach einem der vorhergehenden Ansprüche, gekennzeichnet durch Mittel, die vorgesehen sind, um die Rohrteile während des Verschmelzens unter Federbelastung zusammenzuspannen, um eine Bewegung der Verschmelzungsschmelze aufzunehmen.

7. Verstellbarer Rohrkrümmer nach einem der vorhergehenden Ansprüche, dadurch gekennzeichnet, daß er einen zusätzlichen Rohrabschnitt (14) zwischen den beiden relativ bewegbaren Rohrteilen hat, um einen um volle 90° verstellbaren Krümmer zu schaffen.

8. Rohrkrümmer nach einem der vorhergehenden Ansprüche, dadurch gekennzeichnet, daß wenigstens einer der Rohrteile (10, 10a) um einen Bogen (11) verläuft, der in einem Flansch (12) endet, der zur Rohrachse einen Winkel bildet.

## Revendications

1. Coude de tuyau ajustable comprenant deux éléments de tuyau déplaçables l'un par rapport à l'autre susceptibles d'être disposés par rotation relative selon un angle quelconque l'un par rapport à l'autre à l'intérieur d'une fourchette prédéterminée, chacun des éléments de tuyau (10,10a) étant pourvu à la jonction des deux éléments d'une collerette (12,12a) susceptible de s'accoupler avec la collerette sur l'autre élément de tuyau, caractérisé en ce que des moyens de fusion (15,16) sont prévus et susceptibles de fondre les éléments ensemble lorsqu'ils ont été disposés selon un angle requis,et en ce que chaque collerette présente des gorges ou renfoncements (13) formés sur une face de la collerette afin de recevoir les moyens de fusion qui se présentent sous la forme d'un élément chauffant, l'ensemble étant tel que l'élément chauffant est entièrement contenu et scellé à l'intérieur des collerettes lorsqu'elles sont mises en contact.

2. Coude de tuyau selon la revendication 1, caractérisé en ce que les moyens de fusion (15,16) comportent un élément (16) chauffant électrique.

3. Coude de tuyau selon l'une des revendications précédentes, caractérisé en ce que l'élément chauffant ou de fusion consiste en un disque (15) annulaire en matériau plastique comportant un fil de chauffage (16) noyé ou partiellement incrusté dans l'une ou les deux surfaces du disque.

4. Coude de tuyau selon la revendication 1 ou la revendication 2, caractérisé en ce que les moyens de fusion comportent une bague, ou plaque, ou disque à un ou deux côtés dans lequel est noyé un fil de chauffage.

5. Coude de tuyau selon la revendication 1 ou la revendication 2, caractérisé en ce que les moyens de fusion consistent en un fil électrique chauffant de fusion moulé à l'intérieur de l'une des faces terminales d'un élément de tuyau.

6. Coude de tuyau selon l'une des revendications précédentes, caractérisé par des moyens prévus pour serrer les éléments de tuyau l'un contre l'autre, sous l'action d'un ressort, lors de la fusion, afin de reprendre le déplacement de fusion.

7. Coude de tuyau ajustable selon l'une des revendications précédentes, caractérisé en ce qu'il comporte une section de tuyau additionnelle (14) entre les deux éléments de tuyau déplaçables l'un par rapport à l'autre, afin de réaliser un coude ajustable à 90°.

8. Coude de tuyau selon l'une des revendications précédentes, caractérisé en ce que l'un au moins des éléments de tuyau (10,10a) se prolonge par une courbe (11) se terminant en une collerette (12) qui forme un angle avec l'axe du tuyau.
